# FASCICULE DE BREVET EUROPEEN

(11) **EP 3 121 659 B1**
(45) Date de publication et mention de la délivrance du brevet: **06.06.2018**
(21) Numéro de dépôt: 15178285.1
(22) Date de dépôt: 24.07.2015
(51) Int. Cl.: G04B 13/02, B22F 7/00

(54) **ASSEMBLAGE DE PIECE EN MATERIAU FRAGILE**
ZUSAMMENBAU EINES TEILS AUS ZERBRECHLICHEM MATERIAL
ASSEMBLY OF A PART MADE OF FRAGILE MATERIAL

(43) Date de publication de la demande: 25.01.2017
(73) Titulaire: The Swatch Group Research and Development Ltd., 2074 Marin (CH)
(72) Inventeur: Dubach, Alban, 2502 Bienne (CH); Winkler, Yves, 3185 Schmitten (CH)
(74) Mandataire: Goulette, Ludivine

(56) Documents cités:
- EP-A1- 2 442 189
- EP-A2- 1 677 332
- CH-B1- 699 147
- DE-A1- 19 908 867
- DE-A1- 19 912 618
- DE-A1- 19 939 518

## Description

La présente invention concerne un dispositif comprenant une première pièce réalisée dans un premier matériau et au moins une seconde pièce réalisée dans un second matériau, caractérisé en ce que la seconde pièce est réalisée en une mousse et assemblée à la première pièce.

Le domaine technique de l'invention est le domaine de la mécanique fine.

### ARRIERE PLAN TECHNOLOGIQUE

Il existe de nombreuses méthodes pour réaliser un assemblage d'une première pièce avec une seconde pièce, ces méthodes pouvant être le collage ou le brasage ou le rivetage, etc.

Toutefois, si chaque méthode possède ses propres avantages et inconvénients, il convient de constater que l'assemblage entre des matériaux dissemblables et/ou fragiles est compliqué.

En effet, il existe de nombreux dispositifs qui utilisent au moins un élément réalisé en un matériau fragile. Par exemple, le monde de l'horlogerie commence à utiliser le silicium qui est un métalloïde utilisé pour ses propriétés magnétiques et sa capacité à être insensible aux variations de température lors d'une utilisation courante. C'est pourquoi il est utilisé pour des applications horlogères, notamment pour les organes réglant comme le spiral ou des rouages.

Néanmoins, le silicium a pour inconvénient d'avoir un domaine plastique très faible. Le silicium est un matériau fragile qui a tendance à se briser lorsqu'on lui fait subir une contrainte trop importante.

Or, lorsqu'un rouage en silicium est réalisé, ce dernier est destiné à être fixer à un axe de sorte à être mis en place dans le mouvement de la montre. La fixation de ce rouage à l'axe est réalisée par différentes méthodes.

Une première méthode consiste à chasser ledit rouage sur l'axe comme pour un rouage classique en laiton. Or le chassage consiste en une insertion à force dudit axe dans le trou du rouage. Comme le silicium est un matériau fragile, le chassage est très difficile car une contrainte élevée est appliquée à la pièce en silicium et cela cause généralement la rupture des pièces.

Une autre méthode consiste à utiliser le brasage/soudage pour fixer la pièce en silicium à son support. Or, cette technique est également problématique car pour avoir une chance de souder un matériau céramique ou silicium, il faut avoir recours aux brasures/soudures réactives utilisant des cycles de températures et une atmosphère neutre ou un vide poussé. Ceci engendre des cycles d'assemblage très longs et des risques de rupture/fissuration du silicium.

Par ailleurs, le collage peut être également utilisé mais ce dernier engendre des risques de dégazage de composés organiques néfastes pour le fonctionnement du mouvement et peut poser des problèmes de vieillissement (exposition de la colle aux ultraviolets pour les mouvements squelettes).

### RESUME DE L'INVENTION

L'invention a pour but de pallier les inconvénients de l'art antérieur en proposant de fournir un procédé d'assemblage d'au moins deux pièces entre elles qui permet la fixation de deux pièces de façon simple et sûre sans limitation quant à la nature des pièces fixées ensemble.

A cet effet, l'invention concerne un procédé d'assemblage d'un dispositif comprenant une première pièce et une seconde pièce, ladite première pièce étant réalisée en un premier matériau et ladite seconde pièce étant réalisée en un seconde matériau, ledit dispositif comprenant en outre une troisième pièce réalisée en un troisième matériau faisant office de pièce intermédiaire permettant l'assemblage, caractérisé en ce que ledit procédé comprend en outre les étapes suivantes :
- se munir d'une préforme réalisée dans le troisième matériau, ledit troisième matériau étant un matériau métallique au moins partiellement amorphe apte à augmenter son volume sous des conditions de température et de pression;
- se munir desdites première et seconde pièces et les placer avec la préforme entre deux matrices ayant la forme négative du dispositif ;
- chauffer l'ensemble à une température comprise entre la température de transition vitreuse Tg et la température de cristallisation Tx de la préforme afin de permettre, au plus tard lors de cette étape, à la préforme de former une mousse et de permettre une expansion de ladite préforme afin de remplir la forme négative du dispositif et former ladite troisième pièce;
- refroidir l'ensemble pour figer la préforme et séparer le dispositif des matrices.

Dans un premier mode de réalisation avantageux, la première pièce et la seconde pièce sont chacune munies d'une cavité dans laquelle la préforme métallique amorphe s'étend.

Dans un second mode de réalisation avantageux, la cavité de la première pièce et la cavité de la seconde pièce ont des formes différentes.

Dans un troisième mode de réalisation avantageux, la cavité de la première pièce et la cavité de la seconde pièce ont des sections variables différentes.

Dans un quatrième mode de réalisation avantageux, la première pièce et la seconde pièce présentent des structurations.

Dans un cinquième mode de réalisation avantageux, le procédé comprend une étape préliminaire de fabrication d'une préforme en mousse d'alliage métallique au moins partiellement amorphe.

Dans un sixième mode de réalisation avantageux, l'expansion de la mousse est contrôlée par la température, plus la température est élevée et plus l'expansion est importante.

Dans un autre mode de réalisation avantageux, l'expansion de la mousse dépend de la densité de gaz dans la mousse, plus le volume de gaz emprisonné est grand est plus l'expansion sera grande.

Dans un autre mode de réalisation avantageux, l'expansion est réalisée en ayant la pression dans la mousse supérieure à celle de l'atmosphère.

L'invention concerne également un dispositif comprenant une première pièce et une seconde pièce, une troisième pièce réalisée dans un troisième matériau est utilisée comme pièce intermédiaire pour la fixation de la seconde pièce avec la première pièce, caractérisé en ce que la troisième pièce est réalisée en une mousse d'alliage métallique au moins partiellement amorphe.

Dans un premier mode de réalisation avantageux, la première pièce ou la seconde pièce est munie d'une cavité dans laquelle la mousse métallique amorphe formant la troisième pièce s'étend.

Dans un second mode de réalisation avantageux, la première pièce et la seconde pièce sont chacune munies d'une cavité dans laquelle la mousse métallique amorphe formant la troisième pièce s'étend.

Dans un troisième mode de réalisation avantageux, la cavité de la première pièce et la cavité de la seconde pièce ont des formes différentes.

Dans un quatrième mode de réalisation avantageux, la cavité de la première pièce et la cavité de la seconde pièce ont des sections variables différentes.

Dans un autre mode de réalisation avantageux, la première pièce et la seconde pièce présentent des structurations.

Dans un autre mode de réalisation avantageux, la première pièce et la seconde pièce sont agencées entre elles pour permettre la présence d'un interstice dans lequel la mouse d'alliage métallique au moins partiellement amorphe formant ladite troisième pièce sera mise en forme.

### BREVE DESCRIPTION DES FIGURES

Les buts, avantages et caractéristiques du procédé selon la présente invention apparaîtront plus clairement dans la description détaillée suivante d'au moins une forme de réalisation de l'invention donnée uniquement à titre d'exemple non limitatif et illustrée par les dessins annexés sur lesquels :
- les figures 1 à 6 représente de manière schématique un dispositif et son procédé d'assemblage selon un premier mode de réalisation de l'invention;
- la figure 7 représente de manière schématique une première variante du dispositif selon le premier mode de réalisation de l'invention;
- les figures 8 et 9 représentent de manière schématique une seconde variante du dispositif selon le premier mode de réalisation de l'invention;
- la figure 10 représente de manière schématique une autre variante du dispositif selon le premier mode de réalisation de l'invention.

### DESCRIPTION DETAILLEE

La présente invention concerne un dispositif et son procédé d'assemblage, le dispositif comprenant une première pièce et au moins une seconde pièce.

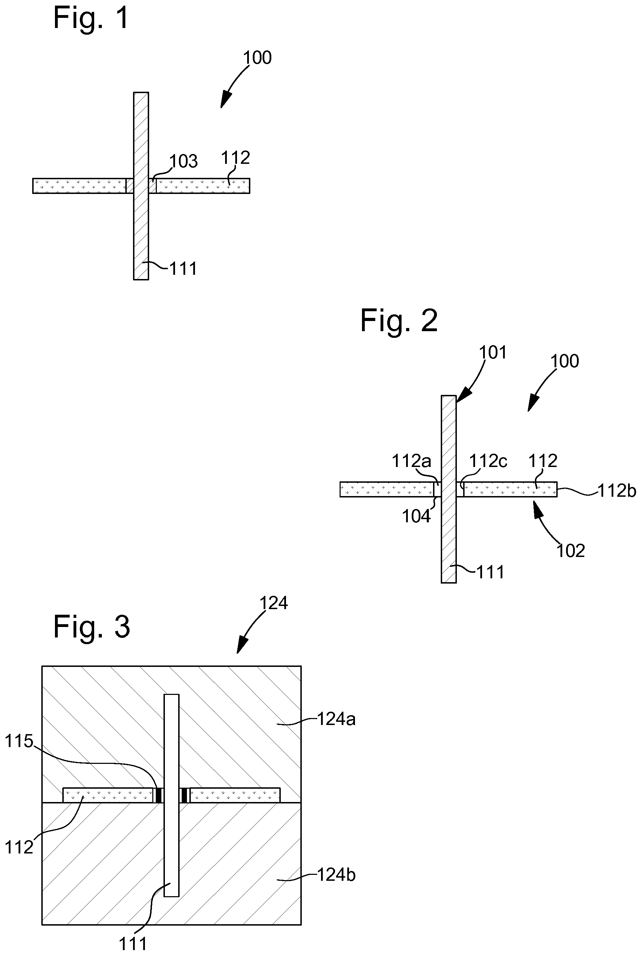

Dans un premier mode de réalisation visible aux figures 1 et 2, le dispositif 100 comprend une première pièce 101 et une seconde pièce 102, cette seconde pièce étant assemblée à la première pièce via une troisième pièce 103 utilisée comme pièce intermédiaire. La première pièce 101 est réalisée dans un premier matériau alors que la seconde pièce 102 est réalisée dans un seconde matériau.

En effet, la première pièce 101 et la seconde pièce 102 sont dimensionnées de sorte que, lorsqu'elles sont montées l'une par rapport à l'autre, un interstice 104 apparait. Cet interstice 104 est alors utilisé pour qu'une pièce intermédiaire 103 puisse s'y insérer, cette dernière étant utilisée pour faire office de joint.

Dans un exemple visible à la figure 2, le dispositif 100 peut être par exemple une roue fixée sur un axe. On considère alors que la première pièce 101 est l'axe 111 et la au moins une seconde pièce 102 est la roue 112. Cette roue 112 se présente sous la forme d'une pièce circulaire percée d'un trou central traversant 112a. Cette pièce circulaire comprend donc une tranche extérieure 112b sur laquelle peuvent être agencées des dents et une tranche intérieure 112c située au niveau du trou central 112a.

Le premier matériau et/ou le second matériau peuvent être des matériaux classiquement utilisés comme l'acier, le laiton, l'aluminium ou le titane mais ils peuvent être également des matériaux dits fragiles. On entend par matériau fragile un matériau qui n'a pas de déformation plastique exploitable comme par exemple le quartz, le rubis, le saphir, le verre, le silicium, le graphite, le carbone ou une céramique telle que le nitrure de silicium et le carbure de silicium ou un composite de type cermet. On comprend alors qu'une pièce dans un tel matériau est très fragile.

La roue 112 est ensuite assemblée sur l'axe 111 de sorte à former le dispositif 100.

Avantageusement selon l'invention, la troisième pièce ou pièce intermédiaire 103 faisant office de joint est réalisée en un troisième matériau, ledit troisième matériau étant un matériau au moins partiellement amorphe comprenant au moins un élément métallique tel qu'un alliage métallique au moins partiellement amorphe, ce matériau métallique amorphe se présentant sous la forme d'une mousse.

Cet élément métallique peut être un élément métallique classique du type Fer, Nickel, Zirconium, titane ou aluminium ou un élément métallique précieux tel que de l'or, du platine, du palladium, du rhénium, du ruthénium, du rhodium, de l'argent, de l'iridium ou de l'osmium. On comprendra par matériau au moins partiellement amorphe que le matériau est apte à se solidifier au moins partiellement en phase amorphe, c'est-à-dire qu'il est soumis à une montée en température au-dessus de sa température de fusion lui permettant de perdre localement toute structure cristalline, ladite montée étant suivie d'un refroidissement à une température inférieure à sa température de transition vitreuse lui permettant de devenir au moins partiellement amorphe. Ce matériau peut alors être un alliage métallique.

D'autres méthodes qui ne nécessitent pas de fusion de la matière sont également envisageables, comme par exemple par :
- mélange mécanique consistant à combiner des matériaux dans un broyeur à billes pour obtenir une poudre fine. Un pressage isostatique à chaud (HIP) est ensuite appliqué pour comprimer simultanément et fritter la poudre. Une étape de traitement thermique final aide à éliminer les contraintes internes existantes produites au cours d'une compaction à froid qui peut avoir été utilisée.
- Irradiation avec des électrons/ions/atomes à haute énergie.
- Déposition.

Une telle mousse peut être réalisée en utilisant différentes techniques. Une première méthode consiste à se munir d'un alliage et de le faire chauffer jusqu'à lui faire atteindre un état liquide. A ce moment-là, des bulles de gaz sont injectées dans ledit alliage se trouvant à l'état liquide. Cette injection de bulles de gaz intervient avant une étape de refroidissement rapide. Cette étape de refroidissement rapide est opérée pour solidifier ledit alliage tout en emprisonnant les bulles de gaz.

Une seconde méthode pour réaliser une telle mousse consiste à se munir d'un alliage et de le faire chauffer jusqu'à lui faire atteindre un état liquide. A ce moment-là, des agents chimiques sont injectées dans ledit alliage se trouvant à l'état liquide. Ces agents chimiques sont des agents libérateurs de gaz de sorte que ces derniers, sous certaines conditions, libèrent des gaz. Cette libération des gaz intervient avant une étape de refroidissement rapide. Cette étape de refroidissement rapide est opérée pour solidifier ledit alliage tout en emprisonnant les bulles de gaz.

Une variante de cette seconde méthode consiste à fournir un matériau apte à devenir une mousse afin d'obtenir un matériau qui ne devient une mousse métallique amorphe qu'au moment de sa mise en forme. En effet, les agents chimiques utilisés sont des agents libérateurs qui libèrent des gaz sous certaines conditions de température et de pression. Ainsi, en augmentant la pression lors du refroidissement, la libération du gaz est contenue. Lors de la mise en forme, l'augmentation de température permet la libération du gaz et donc la transformation du matériau en mousse.

Dans une alternative à cette variante, la préforme peut être fabriquée en compactant un mélange de poudres (poudre métallique déjà amorphe avec une poudre de précurseurs) en utilisant par exemple le pressage ou l'extrusion à chaud entre la température de transition vitreuse Tg et la température de cristallisation Tx.

Dans une seconde variante, les agents chimiques sont présents dès le départ, p.ex. si l'alliage métallique est présent sous forme de poudre les agents peuvent être mélangés avec cette poudre métallique avant de chauffer le mélange.

Une troisième méthode pour réaliser une mousse en métal amorphe consiste en des dépôts successifs de couches de poudre, chaque couche de poudre étant frittée localement par un faisceau laser ou à électron. Ce frittage local permet ainsi, au niveau de chaque couche de poudre, de créer les pores qui permettront de former la mousse.

Le procédé de fabrication et d'assemblage dudit dispositif comprend une première étape consistant à se munir d'une préforme de mousse en métal amorphe 115. Cette préforme présente une forme similaire à celle de l'interstice. Par exemple, dans le cas d'une roue 112 assemblée sur un axe 111, l'interstice sera annulaire et donc la préforme sera également annulaire. On se munit aussi d'un moule 124 formé de deux matrices 124a, 124b. Ces deux matrices sont creusées de sorte à former, lorsqu'elles sont associées, le négatif du dispositif 100 assemblé.

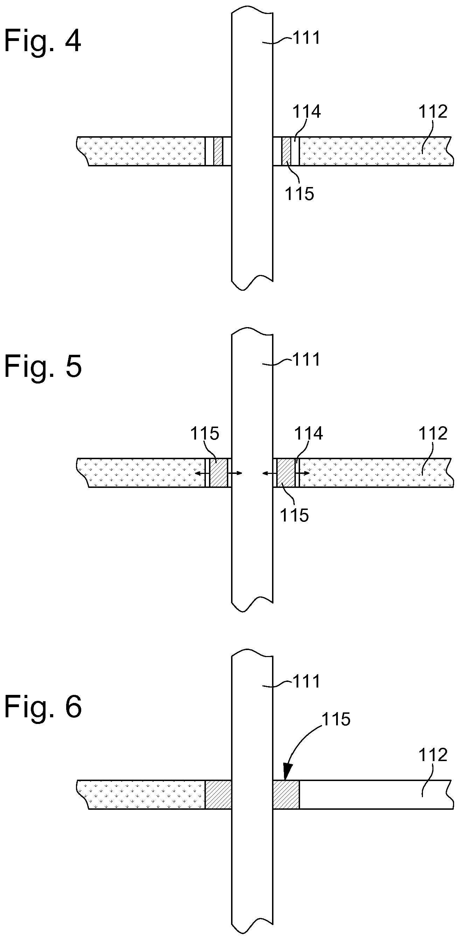

Dans une seconde étape visible à la figure 3, l'axe 111, la roue 112 et la préforme de mousse 115 en métal amorphe sont placées dans le négatif formé par les deux matrices 124a, 124b. La préforme 115 en mousse de métal amorphe est ainsi placée entre l'axe 111 et la roue 112, c'est-à-dire dans son emplacement définitif. Toutefois, comme la préforme n'est pas la pièce définitive, il existe un certain flottement de cette préforme comme visible sur la figure 4.

Dans une troisième étape, une étape de chauffage est réalisée. Cette étape de chauffage consiste à chauffer l'ensemble à une température comprise entre la température de transition vitreuse Tg et la température de cristallisation Tx de la préforme. A cette température, les métaux amorphes ont une viscosité qui diminue fortement, la diminution de la viscosité étant dépendante de la température. Etant donné que le métal amorphe de la mousse se trouve dans un état dit visqueux, l'expansion du gaz provoque une expansion de la préforme en mousse, cette préforme se met à gonfler. Par conséquent, le volume pris par la préforme augmente. Or, le négatif formé par les deux matrices est dimensionné pour avoir les dimensions du dispositif final assemblé de sorte que, lorsque la préforme gonfle, l'axe 111 et la roue 112 se calent dans leur position définitive, la préforme remplissant l'interstice 114 entre elles comme visible à la figure 5 et exerce une pression isostatique sur l'axe 111 et la roue 112.

Pour permettre l'expansion de la préforme en mousse de métal amorphe, il est nécessaire que la pression dans le négatif soit inférieure à la pression du gaz à l'intérieur de la préforme sinon il ne peut y avoir d'expansion. Dans le cas d'un moule étanche, il pourra être astucieusement prévu de mettre la cavité formée par les deux matrices sous vide. Dans le cas où les deux matrices forment un moule non étanche, il sera prévu que l'enceinte dans laquelle se trouve le moule soit mise sous vide. Bien entendu, si la pression du gaz dans les pores du matériau avant que celui-ci ne soit chauffé est plus grande que la pression ambiante c'est-à-dire la pression dans le moule, l'étape de chauffage peut être réalisée sous pression ambiante. Il est juste nécessaire d'avoir une différence de pression entre le gaz dans les pores et la pression ambiante.

De même, pour éviter que la contrainte exercée par l'expansion de la préforme sur l'axe 111 et la roue 112 n'entraine une désolidarisation des deux matrices du moule, ces deux matrices peuvent être fixées entre elles via des moyens de fixation comme des vis ou simplement en exerçant une pression suffisante sur elles.

Une fois que l'expansion de la préforme est réalisée et que l'axe 111 et la roue 112 sont calés dans leur position définitive avec la préforme 115 remplissant l'interstice 104 entre elles comme visible à la figure 6, une étape de refroidissement est opérée. Cette étape de refroidissement est faite pour figer la préforme en mousse de métal amorphe et former la pièce intermédiaire.

L'axe 111 et la roue 112 assemblés avec la pièce intermédiaire 103 sont sorties des matrices pour former le dispositif 100 selon l'invention.

Un avantage de ce mode de réalisation est qu'il permet d'avoir une pièce intermédiaire faisant office de joint qui permet de monter des pièces fragiles sans exercer trop de contraintes et sans avoir des concentrations de contraintes, les contraintes exercées sur les deux pièces étant homogènes et isostatiques.

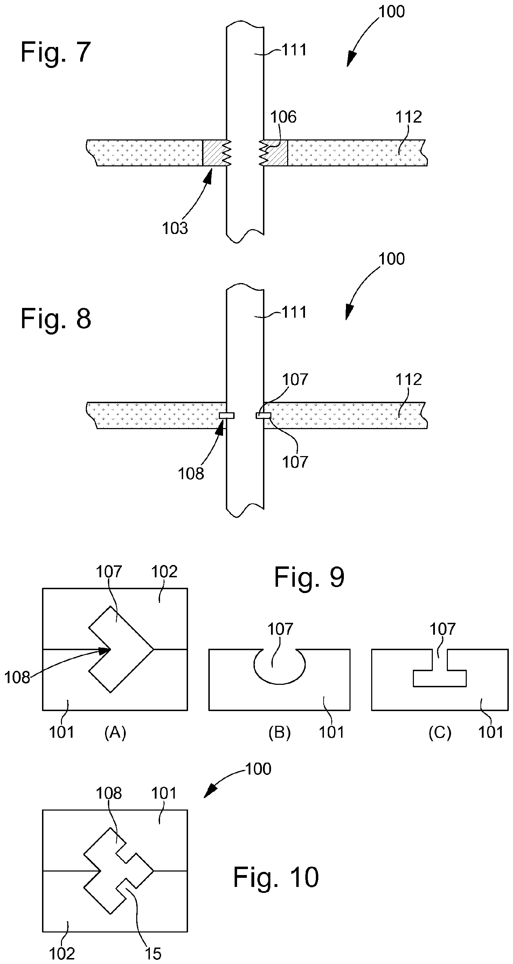

Dans une première variante de ce mode de réalisation visible à la figure 7, la surface de la première pièce 111 et/ou de la seconde pièce 112 en contact avec la pièce intermédiaire 103 en mousse de métal amorphe présente une structuration 106 afin d'améliorer la rugosité et donc l'accroche de la première pièce et de la seconde pièce avec la pièce intermédiaire.

Bien entendu, le dispositif n'est pas limité à une roue fixée à un axe et peut être par exemple une glace montée sur une carrure-lunette ou deux tubes montés l'un dans l'autre ou tout dispositif dans lequel une pièce intermédiaire peut être utilisée pour combler un interstice et fixer deux pièces ensemble. Par exemple, la première pièce peut être un support muni d'un logement dans lequel la ou les secondes pièces sont agencées comme par exemple une mosaïque, le liant étant la mousse en métal amorphe qui exerce une pression sur les première et seconde pièces. Dans un autre exemple, la première pièce peut être un support muni d'un logement dans lequel la ou les secondes pièces sont agencées, celles-ci étant des pierres précises, la mousse en métal amorphe étant le liant utilisé pour fixer lesdites pierres précieuses au support.

Dans une seconde variante du mode de réalisation visible à la figure 9 des cavités 107 peuvent être ajoutées aux structurations 106 et agencées au niveau de l'axe et/ou de la roue de sorte à avoir une cavité 107 agencée sur l'axe 111 et une cavité 107 agencée sur la roue 112 soient au moins en partie en regard l'une de l'autre lorsque l'axe 111 et la roue 112 sont assemblés. Ces deux cavités 107 en regard l'une de l'autre forment alors un logement 108. Dans ce logement 108, la troisième pièce appelée pièce intermédiaire 103 est agencée.

Le procédé de fabrication et d'assemblage dudit dispositif comprend une première étape consistant à se munir d'une préforme de mousse en métal amorphe. Cette préforme présente une forme s'adaptant ou similaire à celle du logement 108 formé par les deux cavités 107.

Une seconde étape consiste à se munir de la première pièce et de la seconde pièce et de placer la préforme dans le logement. L'axe 111 et la roue 112 sont ensuite alignés puis maintenus dans cette position. Pour cela, un pressage ou des moyens de fixation sont utilisés.

Dans une troisième étape, l'étape de chauffage est réalisée, cette étape consistent en une expansion de la préforme en mousse, cette préforme se met à gonfler. Par conséquent, le volume pris par la préforme augmente et entraîne le remplissage du logement formé par les deux cavités par ladite mousse en métal amorphe.

Une fois que l'expansion de la préforme est réalisée, une étape de refroidissement est opérée. Cette étape de refroidissement est faite pour figer la préforme en mousse de métal amorphe et former la pièce intermédiaire qui solidarise la première et la seconde pièces.

La première pièce 101 et la seconde pièce 102 assemblées avec la pièce intermédiaire sont sorties des matrices pour former le dispositif selon l'invention. Cette variante permet avantageusement d'avoir une pièce intermédiaire 103 totalement invisible comme montré en figure 8.

Dans une alternative de la seconde variante du premier mode de réalisation de l'invention visible à la figure 9, la cavité 107 de la première pièce 111 et/ou de la seconde pièce 112 présente une forme permettant d'améliorer l'accroche. Une telle forme consiste en une cavité 107 dont l'ouverture n'est pas constante c'est-à-dire que la surface de ladite ouverture varie en fonction de la profondeur. Comme la mousse métallique amorphe s'étend dans la cavité de sorte à remplir chaque recoin, cela permet d'offrir une retenue supplémentaire. En effet, si les flancs de la cavité ou des cavités étaient rectilignes, une traction sur l'une ou les deux pièces du dispositif pourraient entrainer une désolidarisation des deux pièces et donc une destruction du dispositif. La cavité 107 peut avoir, de façon non limitative, une forme de trapèze rectangle (A) ou être sphérique (B) ou une forme en T (C).

Dans une variante du procédé des différents modes de réalisation, la préforme ne devient une mousse que lors de la troisième étape. En effet, lorsque la mousse utilise des agents chimiques précurseurs qui libèrent du gaz sous l'effet d'une température, il a été précédemment décrit que l'on pouvait fabriquer l'alliage contenant ces agents chimiques précurseurs avant qu'ils ne libèrent le gaz permettant d'obtenir une préforme ne se présentant pas sous la forme d'une mousse.

Cette possibilité permet d'avoir un procédé dans lequel l'étape de transformation de la préforme en mousse et l'étape d'expansion de ladite mousse ont lieu en même temps. Cela est rendu possible car la libération du gaz par les agents chimiques précurseurs et l'expansion de la mousse se produisent lorsque le matériau est chauffé.

Par conséquent, le procédé consiste à se munir de la préforme ne se présentant pas sous la forme d'une mousse et de la placer dans le moule. Le tout est alors chauffé à une température permettant aux agents chimiques précurseurs de libérer du gaz. Cette température permet également au gaz de se dilater afin d'obtenir une expansion du matériau.

Dans les différents modes de réalisation, le contrôle de l'expansion de la préforme en mousse métallique amorphe peut se faire de plusieurs façon.

Une première solution consiste à modifier la densité des bulles de gaz lors de la fabrication de la mousse. Une méthode de fabrication de mousse en métal amorphe consiste à injecter des bulles de gaz dans le métal en fusion et à le refroidir pour emprisonner ces bulles. L'injection de bulles de gaz peut être contrôlée pour que l'injection de bulles de gaz soit plus ou moins homogène et plus ou moins dense. On comprendra alors que plus la densité des bulles de gaz est grande et plus le volume de gaz enfermé dans la mousse est important. Or, plus le volume de gaz enfermé est important et plus l'expansion sera grande du fait de la dilatation du gaz durant l'étape de chauffage. De la même manière, la densité des bulles peut être contrôlée en modifiant la densité des agents précurseurs de sorte à faire varier la densité de gaz libéré.

Une seconde solution consiste à contrôler l'expansion de la mousse métallique amorphe en modifiant la température de l'étape de chauffage. Effectivement, lorsqu'un gaz est soumis à un réchauffement, la quantité de mouvement des particules qui le composent augmente. À volume constant, cela se traduit par une augmentation de la pression, car le nombre de chocs entre particules par unité de surface augmente. Si la pression doit rester constante, le volume du gaz doit alors augmenter, selon la loi des gaz parfaits. Par conséquent, en augmentant ou en diminuant la température de chauffage durant l'étape de chauffage, on fait varier le volume du gaz enfermé dans la mousse métallique amorphe et on modifie donc son expansion.

Dans une troisième solution, le contrôle de l'expansion de la mousse métallique amorphe se fait par contrôle de l'atmosphère dans l'enceinte de chauffage du second mode de réalisation ou dans la cavité du moule dans le premier mode de réalisation. Cette solution part du principe que l'expansion est possible à partir du moment où la pression du gaz enfermé dans la mousse métallique amorphe est supérieure à celle de l'atmosphère extérieure à la mousse. L'idéal est que l'atmosphère extérieure soit un vide suffisant de sorte à favoriser au maximum l'expansion de la mousse. De ce fait, en ajustant la pression extérieure, l'amplitude de l'expansion de ladite mousse est ajustée sachant que plus la pression de l'atmosphère extérieure est importante et moins l'expansion du gaz sera importante.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

Bien entendu, les modes de réalisations précédemment décrits ne se limitent pas à l'assemblage de deux ou trois pièces de sorte que le nombre de pièces n'est pas limité.

De plus, il est envisageable que les cavités peuvent être remplacées ou complétées avec des protubérances 15 comme visibles à la figure 10. Ces protubérances sont les négatifs des cavités et ont la même fonction. On entend par là que la mousse métallique amorphe est mise en forme de sorte à pouvoir envelopper cette ou ces protubérances et améliorer la solidarisation entre la première pièce et la seconde pièce.

## Revendications

1. Procédé d'assemblage d'un dispositif (100) comprenant une première pièce (111) et une seconde pièce (112), ladite première pièce étant réalisée en un premier matériau et ladite seconde pièce étant réalisée en un second matériau, ledit dispositif comprenant en outre une troisième pièce (103) réalisée en un troisième matériau faisant office de pièce intermédiaire permettant l'assemblage, **caractérisé en ce que** ledit procédé comprend en outre les étapes suivantes :
- se munir d'une préforme (115) réalisée dans le troisième matériau, ledit troisième matériau étant un matériau métallique au moins partiellement amorphe apte à augmenter son volume sous des conditions de températures et/ou de pression;
- se munir desdites première et seconde pièces et les placer avec la préforme entre deux matrices ayant la forme négative du dispositif final;
- chauffer l'ensemble à une température comprise entre la température de transition vitreuse Tg et la température de cristallisation Tx de la préforme afin de permettre, au plus tard lors de cette étape, à la préforme de se présenter sous la forme d'une mousse métallique au moins partiellement amorphe et de permettre une expansion de ladite préforme afin de remplir la forme négative du dispositif et former ladite troisième pièce;
- refroidir l'ensemble pour figer la préforme et séparer le dispositif assemblé des matrices.

2. Procédé d'assemblage selon la revendication 1, **caractérisé en ce que** la première pièce et la seconde pièce sont chacune munies d'une cavité dans laquelle la mousse métallique amorphe formant la troisième pièce s'étend.

3. Procédé d'assemblage selon la revendication 1, **caractérisé en ce que** la cavité (107) de la première pièce et la cavité (107) de la seconde pièce ont des formes différentes.

4. Procédé d'assemblage selon la revendication 1, **caractérisé en ce que** la cavité de la première pièce et la cavité de la seconde pièce ont des sections variables différentes.

5. Procédé d'assemblage selon l'une des revendications précédentes, **caractérisé en ce que** la première pièce et la seconde pièce présentent des structurations.

6. Procédé d'assemblage selon l'une des revendications précédentes, **caractérisé en ce qu'**il comprend une étape préliminaire de fabrication d'une préforme en mousse d'alliage métallique au moins partiellement amorphe.

7. Procédé d'assemblage selon l'une des revendications précédentes, **caractérisé en ce que** l'expansion de la mousse est contrôlée par la température, plus la température est élevée et plus l'expansion est importante.

8. Procédé d'assemblage selon l'une des revendications précédentes, **caractérisé en ce que** l'expansion de la mousse dépend de la densité de gaz dans la mousse, plus le volume de gaz emprisonné est grand est plus l'expansion sera grande.

9. Procédé d'assemblage selon l'une des revendications précédentes, **caractérisé en ce que** l'expansion est réalisée en ayant la pression dans la mousse supérieure à celle de la pression ambiante.

10. Dispositif (100) comprenant une première pièce (111) en un premier matériau et une seconde pièce (112) en un deuxième matériau, une troisième pièce (103) réalisée dans un troisième matériau est utilisée comme pièce intermédiaire pour la fixation de la seconde pièce avec la première pièce, **caractérisé en ce que** la troisième pièce est réalisée en une mousse d'alliage métallique au moins partiellement amorphe et **en ce que** la troisième pièce entoure ladite deuxième pièce.

11. Dispositif selon la revendication 10, **caractérisé en ce que** la première pièce ou la seconde pièce est munie d'une cavité dans laquelle la mousse métallique amorphe formant la troisième pièce s'étend.

12. Dispositif selon la revendication 10, **caractérisé en ce que** la première pièce et la seconde pièce sont chacune munies d'une cavité dans laquelle la mousse métallique amorphe formant la troisième pièce s'étend.

13. Dispositif selon la revendication 12, **caractérisé en ce que** la cavité de la première pièce et la cavité de la seconde pièce ont des formes différentes.

14. Dispositif selon la revendication 12, **caractérisé en ce que** la cavité de la première pièce et la cavité de la seconde pièce ont des sections variables différentes.

15. Dispositif selon l'une des revendications 12 à 14, **caractérisé en ce que** la première pièce et la seconde pièce présentent des structurations.

16. Dispositif selon la revendication 10, **caractérisé en ce que** la première pièce et la seconde pièce sont agencées entre elles pour permettre la présence d'un interstice dans lequel la mousse d'alliage métallique au moins partiellement amorphe formant ladite troisième pièce sera mise en forme.

17. Dispositif selon la revendication 10, **caractérisé en ce que** la troisième pièce n'est pas visible.

## Patentansprüche

1. Verfahren zum Zusammenfügen einer Vorrichtung (100), die ein erstes Teil (111) und ein zweites Teil (112) umfasst, wobei das erste Teil aus einem ersten Material hergestellt ist und das zweite Teil aus einem zweiten Material hergestellt ist, wobei die Vorrichtung ferner ein drittes Teil (103) umfasst, das aus einem dritten Material hergestellt ist und als Zwischenteil dient, das die Zusammenfügung ermöglicht, **dadurch gekennzeichnet, dass** das Verfahren ferner die folgenden Schritte umfasst:
- Bereitstellen eines Vorformlings (115), der aus dem dritten Material hergestellt ist, wobei das dritte Material ein zumindest teilweise amorphes metallisches Material ist, das fähig ist, sein Volumen unter Temperatur- und/oder Druckbedingungen zu vergrößern;
- Bereitstellen des ersten und des zweiten Teils und deren Anordnen zusammen mit dem Vorformling zwischen zwei Matrizen, die die negative Form der endgültigen Vorrichtung besitzen;
- Erhitzen der Gesamtheit auf eine Temperatur im Bereich von der Glasübergangstemperatur Tg bis zur Kristallisationstemperatur Tx des Vorformlings, um später in diesem Schritt zu ermöglichen, dass der Vorformling in Form eines zumindest teilweise amorphen Metallschaums vorliegt, und eine Expansion des Vorformlings zu ermöglichen, um die negative Form der Vorrichtung zu füllen und um das dritte Teil zu bilden;
- Abkühlen der Gesamtheit, um den Vorformling erstarren zu lassen und um die zusammengefügte Vorrichtung von den Matrizen zu trennen.

2. Zusammenfügungsverfahren nach Anspruch 1, **dadurch gekennzeichnet, dass** sowohl das erste Teil als auch das zweite Teil mit einem Hohlraum versehen sind, in dem sich der amorphe Metallschaum, der das dritte Teil bildet, erstreckt.

3. Zusammenfügungsverfahren nach Anspruch 1, **dadurch gekennzeichnet, dass** der Hohlraum (107) des ersten Teils und der Hohlraum (107) des zweiten Teils unterschiedliche Formen aufweisen.

4. Zusammenfügungsverfahren nach Anspruch 1, **dadurch gekennzeichnet, dass** der Hohlraum des ersten Teils und der Hohlraum des zweiten Teils unterschiedliche veränderliche Querschnitte besitzen.

5. Zusammenfügungsverfahren nach einem der vorhergehenden Ansprüche, **dadurch gekennzeichnet, dass** das erste Teil und das zweite Teil Strukturierungen aufweisen.

6. Zusammenfügungsverfahren nach einem der vorhergehenden Ansprüche, **dadurch gekennzeichnet, dass** es einen vorhergehenden Schritt des Fertigens eines Vorformlings aus einem zumindest teilweise amorphen Metalllegierungsschaum umfasst.

7. Zusammenfügungsverfahren nach einem der vorhergehenden Ansprüche, **dadurch gekennzeichnet, dass** die Expansion des Schaums durch die Temperatur in der Weise gesteuert wird, dass die Expansion umso größer ist, je höher die Temperatur ist.

8. Zusammenfügungsverfahren nach einem der vorhergehenden Ansprüche, **dadurch gekennzeichnet, dass** die Expansion des Schaums von der Gasdichte im Schaum in der Weise abhängt, dass die Expansion umso größer wird, je größer das eingeschlossene Gasvolumen ist.

9. Zusammenfügungsverfahren nach einem der vorhergehenden Ansprüche, **dadurch gekennzeichnet, dass** die Expansion dadurch erzielt wird, dass der Druck in dem Schaum größer als der Umgebungsdruck ist.

10. Vorrichtung (100), umfassend ein erstes Teil (111) aus einem ersten Material und ein zweites Teil (112) aus einem zweiten Material, wobei ein drittes Teil (103), das aus einem dritten Material hergestellt ist, als Zwischenteil für die Befestigung des zweiten Teils an dem ersten Teil verwendet wird, **dadurch gekennzeichnet, dass** das dritte Teil aus einem zumindest teilweise amorphen Metalllegierungsschaum hergestellt ist und dass das dritte Teil das zweite Teil umgibt.

11. Vorrichtung nach Anspruch 10, **dadurch gekennzeichnet, dass** das erste Teil oder das zweite Teil mit einem Hohlraum versehen ist, in dem sich der das dritte Teil bildende amorphe Metallschaum erstreckt.

12. Vorrichtung nach Anspruch 10, **dadurch gekennzeichnet, dass** sowohl das erste Teil als auch das zweite Teil mit einem Hohlraum versehen sind, in dem sich der das dritte Teil bildende amorphe Metallschaum erstreckt.

13. Vorrichtung nach Anspruch 12, **dadurch gekennzeichnet, dass** der Hohlraum des ersten Teils und der Hohlraum des zweiten Teils unterschiedliche Formen aufweisen.

14. Vorrichtung nach Anspruch 12, **dadurch gekennzeichnet, dass** der Hohlraum des ersten Teils und der Hohlraum des zweiten Teils unterschiedliche veränderliche Querschnitte besitzen.

15. Vorrichtung nach einem der Ansprüche 12 bis 14, **dadurch gekennzeichnet, dass** das erste Teil und das zweite Teil Strukturierungen aufweisen.

16. Vorrichtung nach Anspruch 10, **dadurch gekennzeichnet, dass** das erste Teil und das zweite Teil relativ zueinander so angeordnet sind, dass sie das Vorhandensein eines Zwischenraums ermöglichen, in dem der zumindest teilweise amorphe Metalllegierungsschaum, der das dritte Teil bildet, geformt wird.

17. Vorrichtung nach Anspruch 10, **dadurch gekennzeichnet, dass** das dritte Teil nicht sichtbar ist.

## Claims

1. A process for assembling a device (100) comprising a first part (111) and a second part (112), said first part being made of a first material and said second part being made of a second material, said device additionally comprising a third part (103) made of a third material that acts as an intermediate part enabling the assembling, **characterized in that** said process additionally comprises the following steps:
- providing a preform (115) made from the third material, said third material being an at least partially amorphous metal material capable of increasing its volume under temperature and/or pressure conditions;
- providing said first and second parts and placing them with the preform between two cavity plates having the negative shape of the final device;
- heating the assembly to a temperature between the glass transition temperature Tg and the crystallization temperature Tx of the preform in order to enable, at the latest during this step, the preform to be in the form of an at least partially amorphous metal foam and to enable an expansion of said preform in order to fill the negative shape of the device and form said third part;
- cooling the assembly in order to solidify the preform and separate the assembled device from the cavity plates.

2. The assembling process as claimed in claim 1, **characterized in that** the first part and the second part are each provided with a cavity into which the amorphous metal foam forming the third part extends.

3. The assembling process as claimed in claim 1, **characterized in that** the cavity (107) of the first part and the cavity (107) of the second part have different shapes.

4. The assembling process as claimed in claim 1, **characterized in that** the cavity of the first part and the cavity of the second part have different variable cross sections.

5. The assembling process as claimed in one of the preceding claims, **characterized in that** the first part and the second part have structurings.

6. The assembling process as claimed in one of the preceding claims, **characterized in that** it comprises a preliminary step of manufacturing a preform made of at least partially amorphous metal alloy foam.

7. The assembling process as claimed in one of the preceding claims, **characterized in that** the expansion of the foam is controlled by the temperature, the higher the temperature, the greater the expansion.

8. The assembling process as claimed in one of the preceding claims, **characterized in that** the expansion of the foam depends on the density of gas in the foam, the greater the volume of trapped gas, the greater the expansion.

9. The assembling process as claimed in one of the preceding claims, **characterized in that** the expansion is carried out by having the pressure in the foam greater than that of the ambient pressure.

10. A device (100) comprising a first part (111) and a second part (112), a third part (103) made from a third material is used as intermediate part for fastening the second part to the first part, **characterized in that** the third part is made of an at least partially amorphous metal alloy foam and **in that** the third part surrounds the second part.

11. The device as claimed in claim 10, **characterized in that** the first part or the second part is provided with a cavity into which the amorphous metal foam forming the third part extends.

12. The device as claimed in claim 10, **characterized in that** the first part and the second part are each provided with a cavity into which the amorphous metal foam forming the third part extends.

13. The device as claimed in claim 12, **characterized in that** the cavity of the first part and the cavity of the second part have different shapes.

14. The device as claimed in claim 12, **characterized in that** the cavity of the first part and the cavity of the second part have different variable cross sections.

15. The device as claimed in one of claims 12 to 14, **characterized in that** the first part and the second part have structurings.

16. The device as claimed in claim 10, **characterized in that** the first part and the second part are arranged with one another to enable the presence of an interstice in which the at least partially amorphous metal alloy foam forming said third part will be shaped.

17. The device as claimed in claim 10, **characterized in that** the third part is not visible.
